# EUROPEAN PATENT SPECIFICATION

(11) **EP 2 303 532 B1**
(45) Date of publication and mention of the grant of the patent: **18.07.2012**
(21) Application number: 09765903.1
(22) Date of filing: 18.06.2009
(51) Int. Cl.: B29B 11/10, B29C 47/06

(54) **Method for preparing coated binder units**
Verfahren zur Herstellung von beschichteten Bindemitteleinheiten
Procédé pour la fabrication d'unités de liaison revêtues

(30) Priority: 20.06.2008 EP 08290592
(43) Date of publication of application: 06.04.2011
(73) Proprietor: Shell Internationale Research Maatschappij B.V., 2596 HR The Hague (NL)
(72) Inventor: DE AMORIM NOVAIS DA COSTA NÓBREGA, João Miguel, P-4715-304 Braga (PT); DIAS PESSOA, Eurico Filipe, P-4700-565 Braga (PT); GOMES COVAS, José António Colaço, P-7515-322 Braga (PT); LOPES MAIA, João Manuel Luis, P-4700-154 Braga (PT); NIGEN-CHAIDRON, Sophie, Kajang 43000 (MY)
(74) Representative: Matthezing, Robert Maarten
(86) International application number: PCT/EP2009/057631
(87) International publication number: WO 2009/153324

(56) References cited:
- EP-A- 0 754 535
- WO-A-2008/095967
- US-A- 4 154 893
- US-A- 5 641 445
- DATABASE WPI Week 198545 Thomson Scientific, London, GB; AN 1985-279664 XP002506812 -& JP 60 189414 A (MITSUBOSHI SANGYO KK) 26 September 1985 (1985-09-26)

## Description

### Field of the Invention

The invention relates to a method for preparing coated binder units.

### Background of the Invention

Bitumen is a viscous liquid or a solid consisting essentially of hydrocarbons and their derivatives. It is soluble in trichloroethylene and softens gradually when heated. Bitumen is used as a binder in a variety of applications. Bitumen may be combined with aggregate to provide asphalt that can be used in the manufacture of roads. Alternatively bitumen may be used in industrial applications such as roofing, flooring or sealing.

In recent years synthetic binders have also been used. Synthetic binders, such as Shell's Mexphalte C ® possess similar rheological and mechanical properties to the bituminous binders typically used in road applications. The synthetic binders are typically clear, so they are readily pigmented and are used to obtain coloured asphalt mixture. In this description, the term "binder" covers both bituminous materials and synthetic materials having similar rheological and mechanical properties. The term "asphalt" in the present description is used to describe a mixture of binder and aggregate.

Bituminous and synthetic binders are typically transported in the heated state to ensure that they are sufficiently fluid for use. However, this is costly in terms of energy usage and requires strict safety procedures. Also, if the binder is stored at elevated temperature for an extended period this can lead to changes in the properties of the binder, so storage time is typically limited to avoid degradation in binder properties.

It is desirable to transport and store the binder at ambient temperature, preferably as units of a size and shape that are readily handled. The term "unit" as used in the present description encompasses a wide variety of discrete solid entities such as pellets, rods, sheets etc. However, the binders tend to be extremely sticky so that the units creep and agglomerate, particularly when stored at ambient temperature for extended periods. Efforts have been made to produce binder units that are not subject to agglomeration.

US 3,026,568 describes a process wherein coated bitumen pellets are prepared by spraying molten bitumen into a stream of air carrying a powdered material such as powdered limestone. The purpose of the coating is to prevent the pellets from adhering to one another. It has proved difficult to practise this method on an industrial scale.

US 5,254,385 describes encapsulated asphalt (bitumen) articles wherein bitumen is contained inside a polymer cover. A polymeric material is heat sealed to form a three side container or pouch, molten bitumen is poured into the pouch, and the remaining opening of the container is closed by heat sealing. The encapsulation prevents separate bitumen elements from agglomerating, adhering or coalescing to form larger masses of bitumen. The encapsulation process is likely to be slow, and is probably too costly to be applied on a large scale.

EP 1 361 256 describes a method for preparing granules wherein an oil is mixed with polyethylene, a bituminous material is added, and the resulting mixture is subjected to mixing extrusion. The resulting granules can be described as a mixture of a polyethylene phase and a bituminous phase in which the polyethylene phase is a semi-continuous phase and the bitumen phase is a discontinuous phase. A high proportion of polymer in the granules is needed to prevent deformation of the granules, and this may detrimentally alter the properties of the bitumen and/or may increase the cost of the granules such that they are unlikely to be economical.

US 2008/0015288 describes an extrusion process for preparing master batch granules comprising bitumen and polymer. To prevent the granules from sticking, an anti-sticking agent may be included in the granules, e.g. by adding the anti-sticking agent directly to the extruder, or the anti-sticking agent may be applied to the surface of the extrudate as it cools on leaving the extruder. Again, a high proportion of polymer in the granules is needed to prevent deformation of the granules, and this may detrimentally alter the properties of the bitumen and/or may increase the cost of the granules such that they are unlikely to be economical.

The binder is a bituminous binder or a synthetic binder comprising a resin, an oil and coating discoles a number of different methods for making billets and preforms for use in various plastic US 4154893 discloses a processing procedures, particularly compression moulding, forging and compaction moulding. In section III of (starting in coL 4, line 54), a method of manufacturing billets using extrusion is disclosed. There is US 4154893 no suggestion that billets manufactured by this method could have a core of bituminous binder or synthetic binder comprising a resin and an oil. In section IV of (starting in coL 7, line 29), a below US 4154893 moulding method for manufacturing filled billets is disclosed. It is stated that asphalt could be inserted into the billet during the blowing operation (coL 7, lines 47-50).

The present inventors have sought to provide an alternative method of preparing binder units that can be transported at ambient temperatures and are not subject to creep and agglomeration.

### Summary of the Invention

Accordingly the present invention provides a method for preparing coated binder units wherein the coated binder units comprise a core of binder coated with a layer of coating material, wherein the binder is a bituminous binder or a synthetic binder comprising a resin, an oil and optionally a polymer according to claim 1.

The inventors have developed a co-extrusion process that can be used to prepare coated binder units that are not subject to agglomeration and that can be transported and stored for extended periods at ambient temperature.

### Brief Description of the Drawings

Figure 1 is a schematic diagram showing a device that can be used in the method of the invention.
Figure 2 is a schematic diagram showing another device that can be used in the method of the invention.

### Detailed Description of the Invention

The coated binder units comprise a core of binder coated with a layer of coating material. In one embodiment of the invention, the units are pellets, having a central core of binder and an outer layer of coating material. In a second embodiment, the units are rods having a central core of binder through part or all of the length of the rod and an outer layer of coating material. In a third embodiment of the invention, the units are sheets wherein a central layer of binder is located between outer layers of coating material. The exact shape of the coated binder units can vary, but desirably the coated binder units are of a shape and size such that they are readily handled and transported. Pellets have the advantages usually associated with the storage, flow, and handling of granular materials.

The binder is a bituminous binder or is a synthetic binder having similar rheological and mechanical properties to a bituminous binder. The penetration at 25°C of the binder (as measured according to EN 1426) is preferably between 0 and 350, more preferably between 10 and 250. The softening point of the binder (as measured according to EN 1427) is preferably between 30 and 140°C, more preferably between 35 and 95°C.

Preferably the binder is a bituminous binder. Suitable bituminous binders include residues from the distillation of crude oil, cracked residues, naturally occurring bitumens or blends of various bitumen types. Examples of bituminous binders that may be conveniently used in the present invention include distillation or "straight run" bitumen, precipitation bitumen, e.g. propane bitumen, oxidised or blown bitumen, naphthenic bitumen or mixtures thereof. The bituminous binder may be prepared by blending a bitumen with a flux oil, e.g. an aromatic, napthenic or paraffinic flux oil, or a vegetable oil. The bituminous binder may also comprise a polymer such that the binder is a polymer-modified bitumen. Suitable polymers include thermoplastic elastomers and plastomers, e.g. styrenic block copolymers and/or olefinic copolymers such as ethylene vinyl acetate. The polymer can be from petroleum or renewable origin, or rubber recovered from recycled tyres. The binder preferably contains up to 10wt% polymer, based upon the weight of the binder.

In an alternative embodiment, the binder is a synthetic binder. The synthetic binder comprises a resin, an oil and optionally a polymer. The resin may be a resin of vegetable origin such as a rosin ester. Alternatively, the resin may be a petroleum resin or a coumarone-indene resin. The resin may have been modified such that it contains carboxylic acid, carboxylic acid anhydride or hydroxyl groups, as described in EP 179 510. The oil may be a vegetable oil or a mineral lubricating oil extract, e.g. a Bright-Stock extract.

The binder may comprise a filler material. The filler material may be any mineral material wherein the particle size is smaller than 75µm. The binder may comprise up to 20wt% filler, based upon the weight of the binder.

The binder may comprise sulphur, in amount of from 0.01 to 80wt%, based upon the weight of the binder, more preferably from 0.01 to 50wt%.

The coating material is a material that inhibits agglomeration of the coated binder units when the units are stored at ambient conditions. The coating material may improve the aesthetic aspects of the coated binder units (e.g. may be coloured), may provide information (e.g. may be printed with text or an image) and/or may improve the binding functions of the binder.

The coating material is preferably a polymer, bitumen having a penetration at 25°C of less than 5dmm, sulphur, blends of these materials with filler materials, blends of these materials with fibre materials, and blends of two or more of these materials. More preferably the coating material is a polymer or a blend comprising at least 50wt% polymer. The polymer may be of renewable origin and/or may be biodegradable. In one embodiment, the coating material is a polyolefin such as polyethylene or polystyrene, or is a blend comprising at least 50wt% polyolefin. Preferably the coating material is polyethylene or a blend comprising at least 50wt% polyethylene. In another embodiment, the coating material is a thermoplastic elastomer or plastomer, or a blend comprising at least 50wt% of a thermoplastic elastomer or plastomer. In this embodiment the polymer is used both as a coating material (to inhibit agglomeration of the units) and as a component of the binder formulation, improving the properties of the product that will be made from the binder. The thermoplastic elastomer or plastomer may be a styrenic block copolymer, olefinic copolymer such as ethylene vinyl acetate, polyurethane or polyether-polyester copolymer.

The coating material may contain additives that enhance the properties of asphalt that is produced from the coated binder units.

The melting point of the coating material is preferably lower than 200°C to prevent emissions from the binder.

The layer of coating material in the coated binder units of the invention is preferably substantially continuous, such that at least 90% of the surface area of the core of binder is coated with the coating material, more preferably at least 95%, most preferably at least 99%.

The weight ratio of binder to coating material is preferably at least 5:1, more preferably at least 10:1, most preferably at least 30:1. It is desirable to minimise the quantity of coating material if the coating material is a more expensive component than the binder material. If the coating material is a polymer, the polymer may be chosen such that it has positive effects on the resulting binder product and the amount of coating material may be a balance between improved properties and cost. Where the coating material is a thermoplastic elastomer or plastomer, a suitable weight ratio of binder to coating material is between about 99:1 and 9:1.

The average thickness of the layer of coating material is preferably at least 10µm. The layer needs to be sufficiently thick such that a substantially continuous coating is achieved. The average thickness of the layer of coating material is preferably less than 3mm, more preferably less than 1mm and most preferably less than 0.2mm. A layer thicker than 3mm is not preferred if it is desirable to minimise the quantity of coating material.

The coated binder unit may comprise further additives, e.g. softening agents such as wax or penetration index boosters such as waxes, polyphosphoric acid and ethylene polymers. However, in a preferred embodiment the coated binder unit consists essentially of the binder and the coating material.

In the embodiment where the units are pellets, the size of the pellets is preferably such that the average longest dimension of the pellets is preferably less than 200mm, more preferably less than 80mm, yet more preferably less than 50mm and most preferably less than 15mm. The variability in the pellet size is likely to be small because of the use of extrusion in the method of the invention.

The pellets are preferably substantially cylindrical or of flat rectangular shape because their transportation is relatively easy (these shapes have good packing density). However, the pellets may also be spherical, spheroid, or may have irregular shapes.

In the embodiment where the units are rods, the size of the rods is preferably such that the average longest dimension of the rods is more than 15mm, more preferably more than 100mm and more preferably more than 1m. The term "rod" is simply used to describe a shape wherein the length is significantly greater than the diameter, e.g. an aspect ratio of at least 2, more preferably at least 10, most preferably at least 20. The rod is not necessarily straight but can be curved or coiled. The cross-section of the rod may be a variety of shapes, e.g. spherical, oval, cuboid. The average diameter of the rods is preferably less than 100mm, more preferably less than 80mm, yet more preferably less than 50mm and most preferably less than 15mm. The variability in the rod diameter is likely to be small because of the use of extrusion in the method of the invention.

In the embodiment where the units are sheets, the size of the sheets is preferably such that the average longest dimension is more than 15mm, more preferably more than 100mm. The term "sheet" is simply used to describe a substantially flat shape wherein two of the dimensions (length and width) are significantly greater than the thickness. The average width of the sheets is preferably from 10mm to 1m. The average thickness of the sheets is preferably less than 15mm. The variability in the sheet width and thickness is likely to be small because of the use of extrusion in the method of the invention.

The method comprises a step of co-extruding the binder and the coating material, thereby producing an extrudate of binder coated with a layer of coating material. Extrusion is a process wherein a material is pushed and/or drawn through a die of the desired shape. In co-extrusion, two or more materials are extruded simultaneously. In the present process, the binder and the coating material are extruded simultaneously such that the binder is coated with a layer of coating material. Preferably, the binder and the coating material are extruded simultaneously such that the resulting extrudate has a central core of binder and a layer of coating material substantially coating the binder, preferably coating at least 90% of the surface area of the binder, more preferably coating at least 95% of the surface area of the binder, most preferably coating all of the surface area of the binder. However, in an alternative embodiment, the resulting extrudate has a layer of coating material covering only one face of the binder material and further shaping is required to produce units comprising a core of binder coated with a layer of coating material. The preferred thickness of the coating layer on the extrudate is the same as the preferred thickness of the coating layer on the coated binder units.

To prepare pellets or rods, the co-extrusion is preferably carried out using a co-extrusion device having inner and outer dies having concentrically arranged extrusion orifices. The binder is supplied to the inner die and the coating material is supplied to the outer die.

To prepare sheets, the co-extrusion is preferably carried out using a co-extrusion device having two or three dies having laterally arranged extrusion orifices. If there are two dies, the extrudate will consist of a layer of coating material on a layer of binder and further shaping will be required to produce units comprising a core of binder coated with a layer of coating material. If there are three dies, the binder is supplied to the middle die and the extrudate will consist of a layer of binder and layers of coating material on both faces of the binder layer.

It is likely that the binder and the coating material will have significantly different melting temperatures (when the coating material is a polymer, the melting temperature of the polymer is likely to be significantly higher than the melting temperature of the binder). Therefore, in a preferred embodiment of the invention, the heat transfer between the dies is controlled. This can be achieved by having an insulating gap between the dies. The insulating gap can be filled with an insulating material. However, in a preferred embodiment, a coolant material such as water is circulated in the insulating gap. US 3,640,659 provides an example of a co-extrusion device wherein a temperature gradient may be maintained between inner and outer dies during a co-extrusion process.

The binder is preferably fed to the co-extrusion device from a vertical hopper. Preferably the hopper is heated and kept at temperatures above room temperature such that the binder is above its softening point and can flow.

The binder is preferably conveyed towards the die so that it reaches the die at a temperature close to its softening point. Prior to the die, its temperature is desirably higher so that the binder is fluid enough to flow easily, e.g. at a temperature roughly 50°C higher than its softening point, but not exceeding 100°C above its softening point to avoid damaging the product. The binder can be conveyed towards the die using a single screw or a twin screw extruder, a pump (e.g. a gear pump) and appropriate piping or any other device that generates pressure at the die entry.

If the binder is to consist of a blend of components e.g. a binder comprising a filler or a polymer, the blending can be accomplished in an extruder or a pump connecting a hopper to the die.

The binder exits the die at a temperature close to its softening point value (preferably less than 100°C above the softening point, more preferably less than 50°C above the softening point) so that it is still able to flow and, at the same time, present enough consistency for the extrudate to sustain its own shape. Under such thermal conditions, spillage of hot binder is also avoided.

The coating material is preferably conveyed towards the die using a screw or a ram extruder. The temperature and flow rate of the coating material is adapted depending on the nature of the coating material.

The flow rates of the binder and the coating material are determined taking into account the equipment capability so that the flow of the material is stable and the extrudate is regular in shape. Typical residence times within the co-extrusion device are preferably lower than 20 minutes, more preferably lower than 10 minutes.

The extrusion in step (a) may be continuous (producing indefinitely long material) or semi-continuous (producing many short pieces). In one embodiment of the invention, the extrusion may be carried out such that sections of the extrudate are composed only of coating material, e.g. there are sections composed of a core of binder coated with a layer of coating material and there are sections composed only of coating material.

The extrudate preferably has a central core of binder and a layer of coating material substantially coating the binder. In this instance, step (b) wherein the extrudate is further shaped may be desirable but is not necessary, and the extrudate produced in step (a) may be the coated binder unit of the invention. However, where the layer of coating material does not substantially coat the binder in the extrudate, further shaping in step (b) is necessary.

In one embodiment of the invention, in step (b) the shaping of the extrudate consists of division of the extrudate, preferably into pellets or rods or sheets. Division of the extrudate can be achieved by cutting the extrudate. If a cold cutting system is used, the edges are most likely to remain uncoated and will have to be subsequently coated with another agent. Hot cutting is thus preferred, as it will re-melt locally the layer of coating material and allow it to seal the edges. Hot cutting with a certain angle (from the direction perpendicular to the extrudate) is even more preferred as the shear generated during the cutting movement will stretch the outer layer and facilitate sealing. In the embodiment wherein sections of the extrudate consist only of coating material, cutting through the sections consisting only of coating material will provide units wherein the coating material coats substantially all the surface of the binder.

In another embodiment of the invention in step (b) the shaping of the extrudate consists of folding the extrudate. If the extrudate consists of a layer of binder coated with a layer of coating material, folding the material in two can provide units wherein a central core of binder is coated with layers of coating material on both faces and on one edge.

The coated binder units produced according to the method of the invention are suitably combined with aggregate to provide asphalt. The asphalt can be used to form asphalt pavement in conventional pavement-laying processes or alternatively can be used in joining processes such as forming joints between the gaps between paving stones or cobblestones.

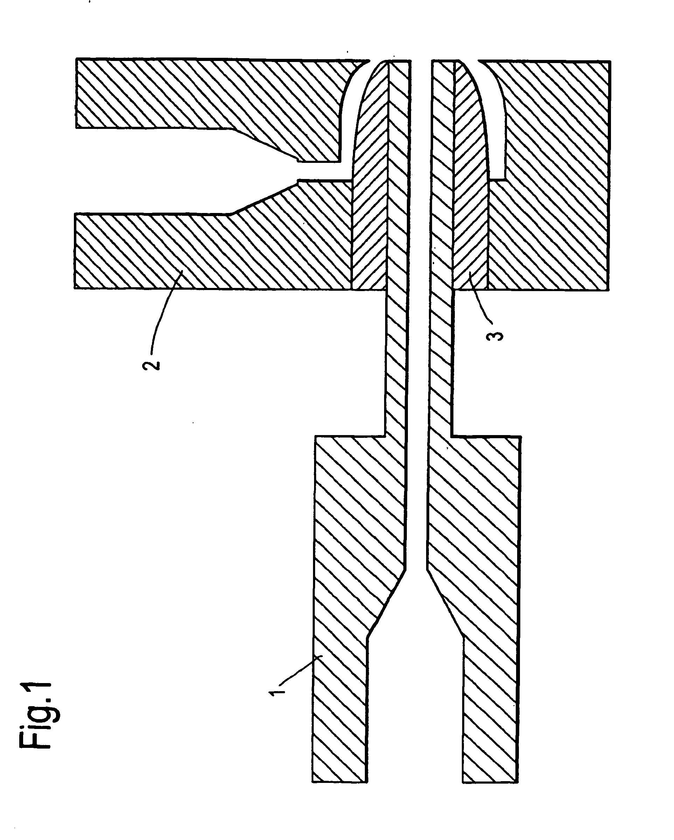

Figure 1 shows an extrusion device that can be used in the method of the invention. Binder is provided to the inner die (1) and coating material, preferably polymer such as polyethylene, is provided to the outer die (2). An insulating gap (3) is present between the inner die (1) and the outer die (2). The insulating gap (3) preferably contains a water cooling system that helps to maintain the temperature gradient between the inner die (1) and the outer die (2). The binder passes through the inner die (1) and the coating material (2) passes through the outer die (2), providing a linear extrudate having a central core of binder and an outer coating of coating material.

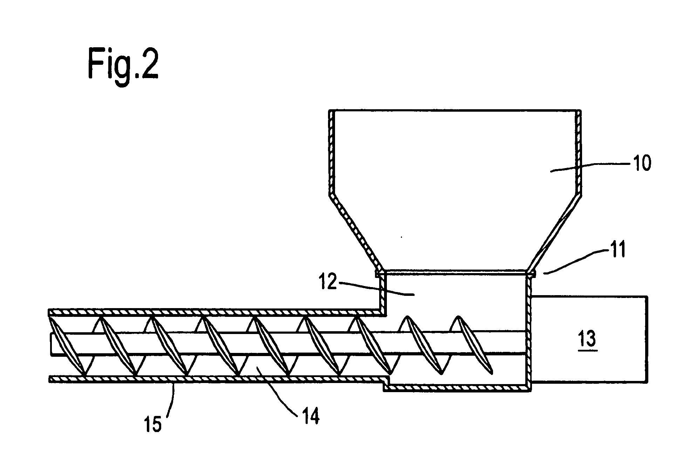

Figure 2 shows a feeding system that can be used to provide the binder to the extrusion device in the method of the invention. The binder is fed to a hopper (10) having a lid. The hopper can be heated and maintained at temperatures above room temperature such that the binder can flow. A bottom lid (11) can be shifted laterally to start and stop the flow of binder from the hopper (10) to the lower body (12) of the feeding system. A motor (13) powers a dosing screw (14) that rotates inside a heated barrel (15).

### Examples

The invention will now be described by reference to examples which are not intended to be limiting of the invention.

### Example 1

A 50/70 penetration grade bitumen was coated with low density polyethylene. Bitumen and polyethylene were fed to a co-extrusion die; the bitumen was fed to the inner die and the polyethylene was fed to the outer die. The bitumen exited the die at a temperature of about 50°C and the polyethylene was processed at a temperature of 160 to 180°C. The resulting extrudate was a rod of bitumen having a diameter of about 10mm, coated with a polyethylene layer with a thickness of below 100µm.

### Example 2

A 50/70 penetration grade bitumen was coated with high density polyethylene. Bitumen and polyethylene were fed to a co-extrusion die; the bitumen was fed to the inner die and the polyethylene was fed to the outer die. The bitumen exited the die at a temperature about 50°C and the polyethylene was processed temperature of 180 to 200°C. The resulting extrudate was a rod of bitumen having a diameter of about 10mm, coated with a polyethylene layer with a thickness of below 100µm.

## Claims

1. **Method for preparing coated binder units** wherein the coated binder units comprise a core of binder coated with a layer of coating material, wherein the binder is a bituminous binder or a synthetic binder comprising a resin, an oil and optionally a polymer, ***characterized in that***
- the weight ratio of binder to coating material is at least 5:1, and **in that**
- the method comprises the step of:
- co-extruding the binder and the coating material, such that the binder and the coating material are extruded simultaneously, thereby producing an extrudate wherein the binder is coated with a layer of coating material.

2. A method according to claim 1, wherein the binder is a bituminous binder.

3. A method according to claim 1, wherein the binder is a synthetic binder, comprising a resin, an oil and optionally a polymer.

4. A method according to any preceding claim, wherein the coating material is chosen from the group consisting of a polymer, bitumen having a penetration at 25°C of less than 5dmm, sulphur, blends of these materials with filler materials, blends of these material with fibre materials, and blends of two or more of these materials.

5. A method according to claim 4, wherein the coating material is a polymer or a blend comprising at least 50wt% polymer.

6. A method according to any preceding claim, wherein the units are pellets, and the average longest dimension of the pellets is less than 100mm.

7. A method according to any one of claims 1 to 5, wherein the units are rods, the average longest dimension of the rods is more than 100mm and the average diameter of the rods is preferably less than 50mm.

8. A method according to any one of claims 1 to 5, wherein the units are sheets, the average longest dimension is more than 100mm, the average width of the sheets is from 10mm to 1m and the average thickness of the sheets is less than 15mm.

9. A method according to any one of claims 1 to 7, wherein the co-extrusion is carried out using a co-extrusion device having inner and outer dies having concentrically arranged extrusion orifices, comprising steps of supply the binder to the inner die and supplying the coating material to the outer die.

10. A method according to claim 9, wherein there is an insulating gap between the inner and outer dies, and a coolant material is circulated in the insulating gap.

11. A method according to any one of claims 1 to 10 comprising the step of shaping the extrudate into coated binder units.

## Patentansprüche

1. Verfahren zur Herstellung von überzogengen Bindemitteleinheiten, wobei die überzogenen Bindmitteleinheiten einen Bindemittelkern umfassen, der mit einer Schicht eines Überzugsmaterials überzogen ist, wobei das Bindemittel ein bituminöses Bindemittel oder ein synthetisches Bindemittel ist, umfassend ein Harz, ein Öl und wahlweise ein Polymer, **dadurch gekennzeichnet, dass**
- das Gewichtsverhältnis von Bindemittel zu Überzugsmaterial mindestens 5:1 beträgt und dass
- das Verfahren den Schritt der Koextrusion des Bindemittels und des Überzugsmaterials umfasst, so dass das Bindemittel und das Überzugsmaterial gleichzeitig extrudiert werden, wodurch ein Extrudat hergestellt wird, wobei das Bindemittel mit einer Schicht eines Überzugsmaterials überzogen wird.

2. Verfahren nach Anspruch 1, wobei das Bindemittel ein bituminöses Bindemittel ist.

3. Verfahren nach Anspruch 1, wobei das Bindemittel ein synthetisches Bindemittel ist, umfassend ein Harz, ein Öl und wahlweise ein Polymer.

4. Verfahren nach einem vorhergehenden Anspruch, wobei das Überzugsmaterial aus der Gruppe bestehend aus einem Polymer, Bitumen mit einer Penetration bei 25°C von weniger als 5 dmm, Schwefel, Mischungen dieser Materialien mit Füllstoffen, Mischungen dieser Materialien mit Faserstoffen und Mischungen von zwei oder mehr dieser Materialien ausgewählt ist.

5. Verfahren nach Anspruch 4, wobei das Überzugsmaterial ein Polymer oder eine Mischung ist, umfassend mindestens 50 Gew.-% Polymer.

6. Verfahren nach einem vorhergehenden Anspruch, wobei die Einheiten Pellets sind und die mittlere längste Abmessung der Pellets weniger als 100 mm beträgt.

7. Verfahren nach einem der Ansprüche 1 bis 5, wobei die Einheiten Stäbe sind, die mittlere längste Abmessung der Stäbe mehr als 100 mm ist und der mittlere Durchmesser der Stäbe vorzugsweise weniger als 50 mm beträgt.

8. Verfahren nach einem der Ansprüche 1 bis 5, wobei die Einheiten Platten sind, die mittlere längste Abmessung mehr als 100 mm beträgt, die mittlere Breite der Platten 10 mm bis 1 m ist und die mittlere Dicke der Platten weniger als 15 mm beträgt.

9. Verfahren nach einem der Ansprüche 1 bis 7, wobei die Koextrusion mittels einer Koextrusionsvorrichtung mit einem inneren und äußeren Formwerkzeug mit konzentrisch angeordneten Extrusionsöffnungen durchgeführt wird, umfassend die Schritte des Zuführens des Bindemittels zu dem inneren Formwerkzeug und Zuführen des Überzugsmaterials zum äußeren Formwerkzeug.

10. Verfahren nach Anspruch 9, wobei ein isolierender Spalt zwischen dem inneren und äußeren Formwerkzeug besteht und ein Kühlmaterial im isolierenden Spalt zirkulieren gelassen wird.

11. Verfahren nach einem der Ansprüche 1 bis 10, umfassend den Schritt des Formens des Extrudats zu überzogenen Bindemitteln.

## Revendications

1. Procédé de préparation d'unités de liant revêtues, dans lequel les unités de liant revêtues comprennent un noyau de liant revêtu d'une couche de matériau de revêtement, dans lequel le liant est un liant bitumineux ou un liant synthétique comprenant une résine, une huile et éventuellement un polymère, **caractérisé en ce que** :
- le rapport pondéral du liant au matériau de revêtement est d'au moins 5:1 et **en ce que** :
- le procédé comprend l'étape de coextrusion du liant et du matériau de revêtement de sorte que le liant et le matériau de revêtement soient extrudés simultanément, produisant de la sorte un extrudat, dans lequel le liant est revêtu d'une couche de matériau de revêtement.

2. Procédé selon la revendication 1, dans lequel le liant est un liant bitumineux.

3. Procédé selon la revendication 1, dans lequel le liant est un liant synthétique comprenant une résine, une huile et éventuellement un polymère.

4. Procédé selon l'une quelconque des revendications précédentes, dans lequel le matériau de revêtement est choisi dans le groupe constitué d'un polymère, d'un bitume ayant une pénétration à 25 °C de moins de 5 dmm, de soufre, de mélanges de ces matériaux avec des charges, de mélanges de ces matériaux avec des matériaux fibreux et de mélanges de deux ou plus de ces matériaux.

5. Procédé selon la revendication 4, dans lequel le matériau de revêtement est un polymère ou un mélange comprenant au moins 50 % en poids de polymère.

6. Procédé selon l'une quelconque des revendications précédentes, dans lequel les unités sont des pastilles et la dimension moyenne la plus longue des pastilles est inférieure à 100 mm.

7. Procédé selon l'une quelconque des revendications 1 à 5, dans lequel les unités sont des tiges et la dimension moyenne la plus longue des tiges est de préférence inférieure à 50 mm.

8. Procédé selon l'une quelconque des revendications 1 à 5, dans lequel les unités sont des feuilles, la dimension moyenne la plus longue est supérieure à 100 mm, la largeur moyenne des feuilles est de 10 mm à 1 m et l'épaisseur moyenne des feuilles est inférieure à 15 mm.

9. Procédé selon l'une quelconque des revendications 1 à 7, dans lequel la coextrusion est effectuée en utilisant un dispositif de coextrusion ayant des filières interne et externe ayant des orifices aménagés concentriquement, comprenant des étapes d'acheminement du liant à la filière interne et d'acheminement du matériau de revêtement à la filière externe.

10. Procédé selon la revendication 9, dans lequel il y a un intervalle isolant entre la filière interne et la filière externe et un matériau isolant est mis en circulation dans l'intervalle isolant.

11. Procédé selon l'une quelconque des revendications 1 à 10, comprenant l'étape de moulage de l'extrudat en unités de liant revêtues.
